# EUROPEAN PATENT APPLICATION

(11) **EP 2 052 622 A1**
(43) Date of publication of application: **29.04.2009**
(21) Application number: 08167481.4
(22) Date of filing: 24.10.2008
(51) Int. Cl.: A23C 11/10, A23D 7/005, C11B 15/00

(54) **Method for the preparation of a spray dried fat powder**

(30) Priority: 26.10.2007 NL 1034582
(71) Applicant: Basic Supply Group B.V., 7812 HZ Emmen (NL)
(72) Inventor: Hiemstra, Martin, 7828 CK Emmen (NL)
(74) Representative: Kortekaas, Marcel C.J.A.

(57) **Abstract**

The invention relates to:
- Method for the preparation of a spray dried fat powder from an oil in water emulsion (O/W emulsion) by using an emulsifier, whereby under circumstances, commonly used for spray drying, an emulsion of an acidified water phase and a fat phase are converted, in which gluten is being used as an emulsifier, from which at least at least 3% of the disulphide bridges are reversibly broken, and wherein the water phase contains at least 0.01 percent of weight of a reducing agent based on the amount of gluten..
- a spray dried fat powder, obtainable by the mentioned procedure.

## Description

### Introduction:

The current invention relates to a method to prepare fat powder from an oil in water emulsion by spray drying. More specifically, it relates to a method wherein gluten is used as emulsifier. The gluten as used in this invention is known as native or vital gluten, which definition excludes enzymatically hydrolyzed or chemically deamidated gluten.

### State of the art:

Casein is an animal protein, present in milk. Casein, or actually a caseinate compound of that, is amongst others used in the food industry to serve as an emulsifier (surface active substance) for the preparation of fat and oil products which are used in powder form.

Other applications of fat powder are for example as coffee creamer and as bakery raw material. Casein is, however, expensive. An idea from US5767107 is to replace casein by gluten. Gluten is an amorphous protein which, combined with starch, can be found in the endosperm of different grains (for example wheat, rye, barley) and the products made thereof. The disadvantage of gluten is that it does not dissolve well in water, which is necessary to use it as an emulsifier, and that it is highly viscous in the solution. This limits the possibilities for the application of gluten.

Instead of using (sodium)caseinate, enzymatically hydrolyzed or chemically deamidated gluten have been used. However, both of these products have the disadvantage that their commercial prices are significantly higher than those of native / vital gluten.
A significant difference between native gluten and these products is that both hydrolyzed and deamidated products are degraded in an irreversible and permanent manner. Furthermore, products based on hydrolyzed or chemically deamidated gluten, or even based on (sodium)caseinate, will not result in a powder that gives a stable dispersion after reconstitution in an acidic medium.

It is part of the current invention to find a good substitute for caseinate, i.e. to find a suitable emulsifier for the preparation of a fat powder by spray drying, whereby the functionality of the fat powder remains similar. Despite the disadvantages of gluten (low solubility, agglomeration in an aqueous environment) this goal has been accomplished, by on the one hand treating the gluten in such a way that they remain highly suitable for the encapsulation of oils or fats, whilst on the other hand , the gluten do not retain their original high viscosity anymore, which is detrimental for spray-drying. To achieve this the gluten does not have to be deamidated and/or be treated enzymatic. An additional advantage is that the new product may contain solely vegetable raw material. Indeed, consumers prefer more natural /less modified products.
The use of gluten is known.

US patent 5,767,107, mentioned before, describes compositions containing gluten and polysaccharides that contain uronic acid residues, which are useful for encapsulating fats, oils and solids. Claimed is the encapsulation of vitamins. Specific to this patent is the use of carbohydrates containing uronic acid, in order to influence the properties of the protein. In contrast to the composition described in the current patent, preparation is done at a neutral pH.

WO0011973 refers to the application of soluble wheat protein for the preparation of a spray dried emulsified topping base. Soluble wheat protein is a product obtained by deamidation or enzymatic degradation (hydrolysis). Deamidation is an irreversible chemical modification which takes place at high temperatures (appr. 100°C or above), under the influence of H⁺ or OH⁻. Through this reaction amide groups on the protein are converted to carboxylic acid groups, causing the glutamines (gluten) to permanently loose their ability to form hydrogen bridges. This increases the solubility of the gluten in water at neutral pH. After deamidation a product is formed with properties very different from those of native gluten.

EP0301278 describes a method for making a "particle dispersing agent" which comprises a protein partial degradation product, useful for reducing viscosity of an aqueous dispersion wherein various water insoluble or sparingly soluble inorganic and/or organic particles are suspended. The treatment with sodium sulphite at temperatures up to 120°C causes severe hydrolysis and deamidation of the proteins,. This patent hence does not relate to processes using native gluten.

EP1602282 relates to "a foamable water in oil type emulsion composition for use in buttercreams or like products and to a method of producing the same". This comprises of a product which, in contrast to the objective of the current patent, is not (spray)dried.

EP0372669 relates to "A stabilized oil and fat powder comprises one or both of gliadin and glutenin and an oil and/or fat. The oil and fat may be partially or entirely clathrated and/or coated with gliadin and/or glutenin". In this patent alcohol is being used as a solvent, whereas in the current patent merely aqueous solvents are used.

A common problem to these prior art processes concerns the high viscosity of the gluten, which problem has been solved by the present inventors.

### Short definition of the invention:

Method for the preparation of spray dried fat powder from an oil in water emulsion (O/W emulsion) by using an emulsifier, whereby under circumstances, common for spray drying, an emulsion of an acidified water phase and a fat phase are converted, whereby gluten is being used as an emulsifier, from which at least 3% of the disulphide bridges are reversibly broken, and wherein the water phase contains at least 0.01 percent of weight of a reducing agent.

### Modes for carrying out the invention:

The current invention relates to a method to prepare fat powder from an O/W emulsion by spray drying. This fat powder is made from edible oils and/or fats, for example from palm oil. The expert, however, knows about various oils and fats that may be applied.

The method includes the preparation of an oil in water emulsion from an oil or fat on the one hand, and an aqueous phase, in general a glucose syrup (for example from Syral), on the other hand, in the presence of an adequate emulsifier. Next, this emulsion is spray dried to prepare dry powder using commonly applied conditions and equipment. Due to the presence of an emulsifier a (stable) emulsion can emerge, whereby the emulsifier can arrange itself around the fat droplets in the aqueous environment. During spray drying the emulsifier also forms a small film around the fat droplets. The protecting film makes sure that the powder can be used without fouling ("good free-flowing") and that the fat and/or oil, of which the fatty acids typically are partly unsaturated, is protected against oxidation and other influences.

Spray drying equipment is supplied by for example Niro, and/or BMA. The O/W-emulsion is spray dried under similar circumstances as the fat powders made with (enzymatically) hydrolysed or deamidated gluten, or casein as emulsifier. Generally an air inlet temperature in the spray dryer between 150°C and 200°C, preferably about 180°C, and a spray pressure between 100 and 150 bar, preferably about 130 bar, are used. The preferred dry matter content is as high as possible and is, for economical reasons, preferably above 50%-60%.

Primary dispersion of the oil in water phase is preferably done by dispersing very intensively, for example under the influence of high pressure. The best results are achieved with a high shear mixer. There are mixers of various forms. Silverson mixers are frequently used mixers and very suitable for the method of the current invention. In this way a relatively stable (pre-)emulsion is made.

It is presumed that the shear forces and turbulent forces make sure that the fat droplets in the pre-emulsion are reduced in size and dispersed in the water phase. Furthermore the dispersing forces allow the gluten to find a place on the fat surface thus stabilizing the emulsion against immediate coalescence. It is not strictly necessary to intensively disperse the oil prior to the actual homogenisation step, but it significantly reduces the risk of phase separation before the high pressure homogenisation step that normally follows after making the pre-emulsion.

By preference the pre-emulsion is therefore subsequently homogenised. During homogenisation, for example by using a high pressure homogeniser, the fat droplets are further reduced in size. The problem of gluten dispersions normally produced is that the viscosity is too high to pump and/or spray the emulsion during the production process. This problem is solved by reducing the disulfide bridges in the gluten by adding a reductor,for example cysteine.

As is commonly applied, the aqueous phase preferably exists of an aqueous solution of one or more mono-, oligo- and/or polysaccharides (separately or jointly referred to as sugar), preferentially an aqueous solution which contains 50-80 weight percentage of sugar. Various sugars are suitable. Common is the application of maltodextrin, lactose, glucose syrup, dextrose, fructose and/or saccharose.

According to the invention, the water phase contains an acid in such an amount that the pH of the water phase is smaller than 6, preferably between 1,5 and 4. The acid may be an organic or inorganic acid or a combination of organic and/or anorganic acids, preferably an acid or combination of acids which are approved for applications in the food industry. Examples of convenient organic acids are acetic acid, formic acid, lactic acid, sorbic acid, benzoic acid, tartaric acid, succinic acid, malic acid, adipic acid, fumaric acid, citric acid, ascorbic acid. Examples of convenient inorganic acids are silicic acid, phosphoric acid, sulphuric acid and hydrochloric acid. This acidification has an important positive effect on the solubility of the gluten.

Gluten is a commercial product, manufactured from various vegetable sources and which can be used in each desirable form, as long as it is unmodified. Gluten originates preferably from wheat starch, maize starch or soya starch. Especially gluten from wheat is very suitable.

The use of an acidified water phase provides that the viscosity of the gluten is manageable. For this the gluten has to be brought in contact with the acidified water phase long enough. Acceptable conditions are contact during 1 to 240 minutes at a temperature between 5°C and 80°C, preferably between 50°C and 70°C and at a pH lower than 6, preferably between 1 and 4 (measured at room temperature).

The temperature during the process is preferably 60°-70°C. If so desired, this could be lower, for example if an oil is used which does not crystallise at room temperature, such as for example soybean or olive oil. However, at lower temperatures, the viscosity will increase.

The pH is important to get the wheat proteins to dissolve in the water phase. Currently a maximum value of 4 is preferred. However, this does not exclude the possibility to use a higher pH value, e.g. 5, in the end product.

According to the method of the current invention at least a part of the disulphide bridges of the gluten is broken in a reversible manner. This is possible by adding for example at least 0,01 weight percent (as a proportion of the amount of gluten) of a reducing agent. Adding the gluten to the aqueous phase, leads to the in-situ reversible reduction of these gluten. Next, the gluten can be dispersed, so that a homogenous dispersion or a solution is attained. Breaking the disulphide bridges leads to a decrease in the viscosity of the aqueous phase, and through that also of the emulsion obtained. This has a positive effect on the spray drying process. Also, this allows the use of a high dry matter content in the emulsion, that would otherwise lead to a too high viscosity and as a result thereof would be unsuitable for spray drying.

The number of free thiol groups in both untreated and cysteine treated gluten may be determined photometrically with DTNB (5-5"-dithio(2-nitrobenzoate) at 410 nm according to the Method of Ellman (1959). Ellman, G. L. (1959) Arch. Biochem. Biophys. 82, 70-77. The total number of cysteine residues in gluten may be determined using amino acid hydrolysis after performic acid oxidation by an automated two-step pre-column derivatization with two different reagents, OPA (o-phthalaldehyde) for primary and FMOC (9-fluorenylmethylchloroformate) for secondary amino acids according to Schuster(1988). Schuster, R. (1988) J. Chromatog. 431, 271-284

Adding cysteine or other reducing agents causes the viscosity of the emulsion to decrease.

The reducing agent is preferably, but not restricted to an organic or inorganic peroxide, and/or an alkaline (earth) metal bromide, iodide, oxide or sulphide, and/or an organic sulphide, glutathione, preferably cysteine. An at first glance unexpected but very positive effect of cysteine is, that the reversibly broken disulphide bridges will reform during spray drying (through the oxidising effect of oxygen in the air). This will improve the protective coating of the fat powder.

The oil in water emulsion is a common emulsion. Preferably this emulsion, consists per 100 parts by weight emulsion of:
- 10 to 80, preferably 15 to 40 parts by weight water phase,
- 90 to 20 preferably 85 to 60 parts by weight fat phase;
- 0,2 to 20 preferably 1 to 5 parts by weight gluten
- 1 to 10, preferably 2 to 5 weight percent of acid calculated on the quantity of gluten.

Because the viscosity of the emulsion according to the current invention, by application of dissolved reduced gluten as emulsifier, can be kept low, the emulsion may contain considerably more dry matter than if the gluten was applied in its non-reduced form; i.e. a form in which the disulphide bridges remain virtually intact. Because of this the dry matter content can be raised for example from 65% to 67-68% or more.

Spray drying preferably takes place under oxidative conditions, preferably in the presence of air, as a result of what at least a part of the broken disulphide bridges will be converted again to disulphides. This may be achieved, for example, by adding ascorbic acid to the emulsion as acidifier. Ascorbic acid will be converted to dehydroascorbic acid during the spray drying. The dehydroascorbic acid may cause the disulfde bridges at least partially to be repaired. This results in a strengthened emulsifying coating around the spray dried fat droplets. The expert will know how to apply oxidative conditions.

The invention also concerns the spray dried fat powder prepared according to the current invention. This fat powder distinguishes itself by the presence of gluten in the powder parts and the residue of a reductor.

As mentioned before, the advantage of producing a fat powder according to the method of this invention over the products based on prior art alternatives, is that the powder is soluble (dispersible) in an acidic medium at pH 4. This is shown in the next experiments

### Examples

Spray drying took place under the following circumstances, in the course of which the fat powder according to method of preparation 1 or 2 was obtained.

**Table 1: circumstances of spray drying**

| .t [min] | Tin [C] | T off [C] | Asp [%] | Pump [%] | Vac [mbar] |
|---|---|---|---|---|---|
| 0 | 170 | 86 | 90 | 23 | -50 |
| 3 | 170 | 102 | 100 | 23 | -50 |
| 5 | 170 | 100 | 100 | 30 | -50 |
| 18 | 150 | 95 | 100 | 30 | -50 |
| 35 | 150 | 95 | 100 | 40 | -50 |
| 50 | 150 | 95 | 100 | 40 | -50 |

**Method of preparation 1**

| Percentages in weight% | |
|---|---|
| Dry matter in % in the emulsion | 60-80 |
| Maltodestrine/glucose syrup DE10-40 | 10-29,5 |
| Citric acid (based on gluten) | 2-5 |
| Cysteine (based on gluten) | 0,2-0,5 |
| Gluten | 0,5-5 |
| fat | 60-85 |

**Method of preparation 2**

| Percentages in weight% | |
|---|---|
| Dry matter in % in the emulsion | 60-80 |
| Maltodestrine/glucose syrup DE10-40 | 35-79,5 |
| Citric acid (based on gluten) | 2-5 |
| Cysteine (based on gluten) | 0,2-0,5 |
| Gluten | 0,5-5 |
| Fat | 20-60 |

The glucose syrup was brought into the water at a pH of 6-8 and a temperature of 60-70°C, after which citric acid and cysteine was added. The pH decreased to pH 1-3,5. Next, the gluten and the palm oil were added, in the course of which the pH increased a little to pH 2-4.

The viscosity of the mixture was determined using a Brookfield Digital Viscometer model LVDVE230 equipped with a "Spindle 61" and a "guard leg" at an emulsion temperature of 50-60°C. The viscosity was as follows:
90 cps by 2,5 rpm
300 cps by 4,0 rpm
330 cps by 6,0 rpm
200 cps by 20,0 rpm

Subsequently, a emulsion was made using homogenization, after which the viscosity of the emulsion obtained was as follows:
1200 cps by 2,5 rpm
1300 cps by 3,0 rpm
1000 cps by 4,0 rpm
940 cps by 5,0 rpm

When cysteine was left out, the viscosity became appr.5000 cps at 2,5 rpm which is so high, that the emulsion could not be properly pumped anymore, making spray drying impossible.

### Experiment:

A composition of spray dried powdered products based on prior art methods is as follows (% are percentages by weight): 80% fat/oil, 16-18% maltodextrin, 2% other components, 2% emulsifier / emulsion stabilizer. The emulsifier/ emulsion stabilizer may e.g. be one of the following products: sodium caseinate, or chemically deamidated gluten. These products are known and/or commercially available.

The above mentioned spray dried powders containing approx 80% fat, have been compared with the product obtained by the method of the current invention. For this comparison 5-30% dispersions /solutions are made in water with a temperature of 20-40 C. The properties of these dispersions are summarized in the Table below.

| **Spray dried powders containing approx 80% fat with emulsifier /stabilizer mentioned below:** | **Stability of the solution / dispersion** |
|---|---|
| | **pH 4** |
| **Sodium caseinate** | **--** |
| **Deamidated gluten** | **--** |
| | |
| **Product obtained by the method of this invention** | **+** |
| **"+"Is given when the dispersion /solution does remains stable; i.e. it does not separate. "-" Is given when separation is observed.** | |

## Claims

1. Method for the preparation of a spray dried fat powder from an oil in water emulsion (O/W emulsion) by using an emulsifier, whereby under circumstances, commonly used for spray drying, an emulsion of an acidified water phase and a fat phase are converted, in which gluten is being used as an emulsifier, from which at least at least 3% of the disulphide bridges are reversibly broken, and wherein the water phase contains at least 0.01 percent of weight of a reducing agent based on the amount of gluten.

2. Method according to claim 1, comprising several steps, in which in step 1 a dispersion of the water phase and the gluten is made, preferably a finely homogenised dispersion or a solution; in which in step 2 an O/W emulsion of the product from step 1 and the fat phase is made, preferably a homogenised emulsion; and in which in step 3 the emulsion is spray dried until a water content is obtained of less then 15 weight percent, preferably less then 10 weight percent, calculated on the spray dried product.

3. Method according to claim 2, in which the water phase contains an acid in such an amount that the pH of the water phase is smaller than 6, preferably between 2 and 4.

4. Method according to one of the claims 1-3, in which the water phase contains at least 0,01 percent of weight of cysteine, based on the amount of gluten, wherein the gluten is added to the water phase and the gluten is reduced in-situ, followed up by a mixing step
in which the gluten is mixed until a homogenised dispersion or a solution is reached.

5. Method according to one of the claims 1-4, in which wheat starch, maize starch or soya starch is used as an emulsifier.

6. Method according to one of the claims 1-5, in which the gluten is brought into contact with the acidified water phase during 1 to 240 minutes, preferably during 10 to 60 minutes, at a temperature between 5 and 80°C, preferably between 50 and 70°C, at a pH smaller than 6, preferably between 2 and 4 (measured at room temperature).

7. Method according tot claims 6, in which the acid is an organic or an inorganic acid or a combination of organic and/or inorganic acids, preferably an acid or combination of acids which is allowed for application in the food industry.

8. Method according to claims 7, in which the acid is organic, selected from one or more of acetic acid, formic acid, lactic acid, sorbic acid, benzoic acid, tartaric acid, succinic acid, malic acid or citric acid, adipic acid, fumaric acid, ascorbic acid, preferably citric acid and/or ascorbic acid.

9. Method according to claims 8, in which the acid is inorganic, selected from one of more of silicic acid, phosphoric acid, sulphuric acid and hydrochloric acid.

10. Method according tot one of the claims 1-9, in which the gluten is treated with a reducing agent, selected from one or more of an organic or anorganic peroxide, and/or alkaline (earth) metal bromide, iodide, oxide or sulphide, and/or an organic sulphide, glutathione, preferably cysteine.

11. Method according to one of the claims 1-10, in which 100 parts by weight emulsion, , consist of: 10 to 80, preferably 15 to 40 parts by weight water phase, 90 to 20 preferably 85 to 60 parts by weight fat phase; 0,2 to 20 preferably 1 to 5 parts by weight gluten 1 to 10, preferably 2 to 5 weight percent of acid calculated on the quantity of gluten.

12. Method according to one of the claims 1-11, in which as water phase a aqueous solution of one or more mono-, oligo- and/or polysaccharides will be applied.

13. Method according to claims 11, in which a aqueous solution of maltodextrine, lactose, glucose syrup, dextrose, fructose, and/or saccharose or a combination of two or more of these, will be used.

14. Method according tot one of the claims 1-13, in which the spray drying will take place under oxidative conditions, preferably in the presence of air, as a result of which at least a part of the broken disulphide bridges will be converted again to disulphides.

15. Spray dried fat powder obtained according to the method of claim 1-14, consisting of an emulsifier encapsulated oil, in which the emulsifier is gluten, which has not been irreversibly modified, neither chemically nor enzymatically, and of which at least 3% and preferably at least 10% of the disulphide bridges originally are being broken in a nonpermanent /reversible manner.

16. Spray dried fat powder as claimed in anyone of claims 1-14, containing a residue of a redactor, preferably of cysteine
